# EUROPÄISCHE PATENTSCHRIFT

(11) **EP 3 152 829 B1**
(45) Veröffentlichungstag und Bekanntmachung des Hinweises auf die Patenterteilung: **08.05.2019**
(21) Anmeldenummer: 15724706.5
(22) Anmeldetag: 28.05.2015
(51) Int. Cl.: H02P 6/14, H02P 21/00

(54) **VERFAHREN UND VORRICHTUNG ZUR STEUERUNG EINES BETRIEBS EINES ELEKTROMOTORS**
METHOD AND APPARATUS FOR CONTROLLING OPERATION OF AN ELECTRIC MOTOR
PROCÉDÉ ET DISPOSITIF DE CONTRÔLE DU FONCTIONNEMENT D'UN MOTEUR ÉLECTRIQUE

(30) Priorität: 06.06.2014 DE 102014210885
(43) Veröffentlichungstag der Anmeldung: 12.04.2017
(73) Patentinhaber: Conti Temic microelectronic GmbH, 90411 Nürnberg (DE)
(72) Erfinder: HINZE, Patrick, 90610 Winkelhaid (DE); SCHNELL, Andreas, 91126 Kammerstein (DE); SCHULZE, Andreas, 91207 Lauf a. d. Peg. OT Neunhof (DE)
(86) Internationale Anmeldenummer: PCT/EP2015/061854
(87) Internationale Veröffentlichungsnummer: WO 2015/185439

(56) Entgegenhaltungen:
- WO-A1-94/07301
- DE-A1- 4 136 538
- DE-A1- 4 233 804
- DE-A1-102008 001 408
- DE-A1-102010 001 427
- DE-A1-102011 080 941
- DE-A1-102011 089 547
- DE-T5-112011 102 997

## Beschreibung

Die Erfindung betrifft ein Verfahren zur Steuerung eines Betriebs eines Elektromotors, insbesondere im Umfeld oder in einer Applikation für ein Fahrzeuggetriebe, wobei in einer Modulation an elektrischen Phasen des Elektromotors anliegende elektrische Spannungen in Abhängigkeit einer Rotorposition des Elektromotors und in Abhängigkeit eines Soll-Ist-Vergleichs zumindest einer, eine Belastung des Elektromotors kennzeichnenden ersten Größe oder einer Ist-Drehzahl des Elektromotors erzeugt und gesteuert ausgegeben werden.

Die Erfindung betrifft weiterhin eine Vorrichtung zur Steuerung eines Betriebs eines Elektromotors, umfassend eine Versorgungseinheit zur gesteuerten Ausgabe von elektrischen Spannungen an elektrischen Phasen des Elektromotors, wobei die Versorgungseinheit mit zumindest einer Erfassungseinheit zur Erfassung einer Rotorposition des Elektromotors und zumindest einem Regler zur Durchführung eines Soll-Ist-Vergleichs einer, eine Belastung des Elektromotors kennzeichnenden ersten Größe gekoppelt ist.

Elektromechanisch oder hydraulisch betätigte Fahrzeuggetriebe umfassen einen oder mehrere Elektromotoren für Pumpen- oder Direktantriebe, wobei mittels des zumindest einen Elektromotors Wähl- oder Schaltvorrichtungen sowie Kupplungs- und Bremsvorrichtungen des Fahrzeuggetriebes angesteuert werden.

Aus dem Stand der Technik sind verschiedene Verfahren zur Steuerung solcher Elektromotoren für Fahrzeuggetriebe bekannt. Eine Stromzufuhr zu einzelnen Motorwicklungen der Elektromotoren wird insbesondere aus Kostengründen mittels einer so genannten Blockkommutierung und einer so genannten B6-Brückenschaltung gesteuert. Hierbei werden innerhalb eines Kommutierungsschrittes ein so genannter High-Side-Schalter einer Halbbrücke der Brückenschaltung und ein so genannter Low-Side-Schalter der Halbbrücke geschaltet. Der Kommutierungsschritt wird in Abhängigkeit einer Rotorposition des Elektromotors gesteuert, wobei zur Ermittlung der Rotorposition beispielsweise im Elektromotor Hall-Sensoren vorgesehen sind. Die Hall-Sensoren sind derart angeordnet, dass über die High-Low-Logikpegel eine elektrische Winkelauflösung von 60° realisiert ist.

Um diese Winkelauflösung zu erhöhen, ist es bekannt, hochauflösende Winkelsensoren zu verwenden. Somit ist eine bessere Anpassung der an die elektrischen Phasen des Elektromotors ausgegebenen Spannungen an eine jeweilige Rotorposition möglich. Eine dabei realisierte so genannte Sinuskommutierung ermöglicht eine höhere Ausnutzung des Wirkungsgrades des Elektromotors bei gleichzeitig ruhigem Motorlauf. Hierbei wird die elektrische Spannung in Abhängigkeit einer Information über einen Rotorwinkel mittels einer Raumzeigermodulation derart erzeugt, dass diese sinusförmig ist.

Zur weiteren Erhöhung des Wirkungsgrades des Elektromotors bei einer Sinuskommutierung ist bekannt, dass ein Strommaximum in den Motorwicklungen zur Position von Magneten des Rotors derart synchronisiert wird, dass ein fester Versatz von 90° entsteht. Hierzu wird eine so genannte feldorientierte Regelung verwendet, bei welcher Phasenströme des Elektromotors in Verbindung mit der Information über die Rotorposition zur Regelung der ausgegebenen Phasenspannungen verwendet werden.

Es ist weiterhin bekannt, dass im so genannten Ankerstellbereich einer elektrischen Maschine entweder ein Drehzahl- oder ein Stromregler einen Modulationsgrad, das heißt die Amplitude des auszugebenden Spannungsvektors, regelt. Die eigentliche Kommutierung des Motors über die B6-Brückenschaltung erfolgt nach Auswertung des Rotorlagewinkels. In Abhängigkeit von der Rotorlage wird ein Kommutierungswinkel für die Modulation gebildet, wonach die entsprechenden elektrischen Phasen des Elektromotors bestromt werden. Um einen Elektromotor für noch höhere Drehzahlen auch in der so genannten Feldschwächung betreiben zu können, ist eine Modifikation der ausgegebenen Motorspannung erforderlich. Dies wird in der feldorientierten Regelung durch zusätzliche Regelung eines feldschwächenden Strom-Anteils realisiert. Weiterer Stand der Technik ist in DE 10 2011 080941 A1, DE 42 33 804 A1 oder in WO 94/07301 A1 gezeigt.

Der Erfindung liegt die Aufgabe zu Grunde, ein gegenüber dem Stand der Technik verbessertes Verfahren und eine verbesserte Vorrichtung zur Steuerung eines Betriebs eines Elektromotors, insbesondere für ein Fahrzeuggetriebe, anzugeben.

Hinsichtlich des Verfahrens wird die Aufgabe erfindungsgemäß durch die im Anspruch 1 angegebenen Merkmale und hinsichtlich der Vorrichtung durch die in Anspruch 10 angegebenen Merkmale gelöst.

Vorteilhafte Ausgestaltungen der Erfindung sind Gegenstand der Unteransprüche.

In einem Verfahren zur Steuerung eines Betriebs eines Elektromotors, insbesondere im Umfeld oder in einer Applikation für ein Fahrzeuggetriebe, werden in einer Modulation an elektrischen Phasen des Elektromotors anliegende elektrische Spannungen in Abhängigkeit einer Rotorposition des Elektromotors und in Abhängigkeit eines Soll-Ist-Vergleichs zumindest einer, eine Belastung des Elektromotors kennzeichnenden ersten Größe oder einer Ist-Drehzahl des Elektromotors erzeugt und gesteuert ausgegeben.

Erfindungsgemäß wird bei einem Erreichen insbesondere eines Feldschwächbereichs des Elektromotors ein die Rotorposition kennzeichnender Rotorlagewinkel mit einem vorgegebenen Vorsteuerwinkel und einem weiteren geregelten Vorsteuerwinkelanteil zu einem Summenwinkel ergänzt, wobei der Summenwinkel bei Erreichen des Feldschwächbereichs zur Kennzeichnung der Rotorposition in der Modulation verwendet wird.

Somit wird ein Ansteuerverfahren eines insbesondere im Umfeld eines Fahrzeuggetriebes angeordneten Elektromotors realisiert, welches es insbesondere im Feldschwächbereich des Elektromotors ermöglicht, Arbeitspunkte desselben bedarfsabhängig und effizienzoptimiert, insbesondere auch bei geringen Versorgungsspannungen, einzuregeln. Hierfür ist gegenüber bekannten Motoransteuerverfahren lediglich ein zusätzlicher unterlagerter Regler erforderlich, welcher insbesondere nach Erreichen einer Stellgrenze einer maximalen Motorspannung einen ausgegebenen Spannungszeiger in seiner Position zum Rotorfeld optimal orientiert. Somit wird gegenüber aus dem Stand der Technik bekannten feldorientierten Regelungen ein einfaches und kostengünstiges Verfahren zur Verfügung gestellt, wobei keine bauraum- und kostenintensiven Komponenten zur Phasenstrommessung erforderlich sind. Das heißt, im Vergleich zu einer feldorientierten Regelung ist stets ein Betrieb des Elektromotors mit maximal möglichem Wirkungsgrad unter Berücksichtigung der Regelbarkeit auch ohne kostenintensive Phasenstromrückmessung realisierbar.

Des Weiteren ist mittels des erfindungsgemäßen Verfahrens ein besonders großer Drehzahl-Drehmoment-Bereich des Elektromotors abdeckbar und es kann insbesondere ein maximierter Wirkungsgrad des Elektromotors auch im Teillastbetrieb desselben im Feldschwächbereich erzielt werden. Hierbei bewirkt das Verfahren eine Unabhängigkeit von einer Versorgungsspannung einer Versorgungseinheit zur gesteuerten Ausgabe der elektrischen Spannungen an die elektrischen Phasen des Elektromotors und ermöglicht durch Regelung eine erhöhte Robustheit gegenüber Bauteiltoleranzen des Elektromotors und dessen Veränderungen während seiner Lebensdauer.

Eine mit dem erfindungsgemäßen Verfahren optimierte und bedarfsgerechte Frühkommutierung des Elektromotors erlaubt es, den Elektromotor auch in der Feldschwächung mit hohem Wirkungsgrad weiter zu betreiben. Es wird dabei so viel zusätzlicher Vorsteuerwinkel eingeregelt, wie zur Erreichung des geforderten Betriebspunkts bei verfügbarer Versorgungsspannung erforderlich ist. Dies ermöglicht eine Ansteuerung mit maximalem Drehmoment je Ampere Stromstärke ohne das Erfordernis eines ineffizienten Vorhalts, beispielsweise gegen Versorgungsspannungsschwankungen.

Das erfindungsgemäße Verfahren verbindet eine schnelle Kennfeldführung mit einer im Arbeitspunkt bedarfsgerecht ausgebildeten Regelung.

Erfindungsgemäss wird das Erreichen des Feldschwächbereichs bei Erreichen einer Obergrenze eines durch eine vorgegebene maximale Amplitude einer Motorspannung und/oder eines Motorstromes gekennzeichneten Modulationsgrades erfasst. Hierdurch ist der Feldschwächbereich besonders einfach und zuverlässig erfassbar.

Um den Betrieb des Elektromotors im Feldschwächbereich weiter zu verbessern wird erfindungsgemäss bei Erreichen des Feldschwächbereichs der Modulationsgrad an seiner Obergrenze festgelegt, sozusagen "eingefroren", und die Modulation der elektrischen Spannungen wird vorzugsweise allein mittels Regelung des Vorsteuerwinkels durchgeführt.

Eine mögliche Weiterbildung des Verfahrens sieht vor, dass der Vorsteuerwinkel in Abhängigkeit einer Ist-Drehzahl und zumindest einer, eine Belastung des Elektromotors kennzeichnenden zweiten Größe aus einem Vorsteuerwinkel-Kennfeld ermittelt wird. Das somit kennfeldgesteuerte Verfahren macht aufgrund der Steuerung des Betriebs des Elektromotors unter Verwendung des Vorsteuerwinkel-Kennfeldes lediglich einen geringen Datenverarbeitungsaufwand sowie daraus folgend einen geringen Aufwand für Software erforderlich. Somit ist lediglich eine geringe Rechenleistung zur Realisierung des Verfahrens und daraus folgend ein geringer Ressourceneinsatz notwendig.

Gemäß einer Ausgestaltung des Verfahrens wird der Vorsteuerwinkel insbesondere ausschließlich für einen Ankerstellbereich des Elektromotors vorgegeben, wobei hierdurch der Vorteil einer schnellen Steuerung mit der Eigenschaft eines Reglers, bleibende Abweichungen zu eliminieren, verbunden wird.

Um eine Begrenzung der Begrenzung des Vorsteuerwinkels zu realisieren, wird in einer weiteren möglichen Ausgestaltung des Verfahrens ein maximaler Wert des Vorsteuerwinkels vorgegeben.

Um stets eine optimierte Regelung der Drehzahl des Elektromotors zu realisieren, wird der Vorsteuerwinkel insbesondere derart vorgegeben, dass eine Regelreserve in der Modulation für die Spannung als Stellgröße erzeugt wird.

Eine mögliche Ausgestaltung des Verfahrens sieht vor, dass als die Belastung des Elektromotors kennzeichnende erste Größe eine Drehzahl, ein Drehmoment und/oder ein Motorstrom verwendet werden. Diese Größen bilden die Belastung des Elektromotors besonders genau ab.

Gemäß einer Weiterbildung des Verfahrens werden als die Belastung des Elektromotors kennzeichnende zweite Größe eine aktuell geforderte Motorspannung, ein aktueller Gleichstrom, ein aus dem Gleichstrom und einem Tastverhältnis ermittelter Phasenstrom, ein gemessener Phasenstrom und/oder ein Drehmoment verwendet. Diese Größen bilden die Belastung des Elektromotors besonders genau ab. Insbesondere bei Verwendung der Motorspannung als Eingangsgröße für das Vorsteuerwinkel-Kennfeld wird der Nachteil einer schwankenden Versorgungsspannung überwunden, da die Schwankung bei einer möglichen Umrechnung der geforderten Motorspannung in einen Modulationsgrad oder Tastgrad, auch als duty cycle bezeichnet, über die zur Verfügung stehende Zwischenkreisspannung ausgeglichen wird.

In einer möglichen Ausgestaltung des Verfahrens wird das Vorsteuerwinkel-Kennfeld erzeugt, indem zu Drehzahl- und Drehmoment-Betriebspunkten des Elektromotors Vorsteuerwinkel ermittelt werden, bei welchen zumindest der Wirkungsgrad des Elektromotors maximiert ist. Somit ist bei Verwendung des Vorsteuerwinkel-Kennfeldes stets ein optimaler Betriebspunkt des Elektromotors bei maximalem Wirkungsgrad einstellbar.

In einer möglichen weiteren Ausgestaltung des Verfahrens werden die Spannungen in Abhängigkeit des Summenwinkels in einer Raumzeigermodulation ermittelt. Mittels der Raumzeigermodulation ist eine sehr hohe Winkelauflösung des ausgegebenen Spannungszeigers, d. h. eine Diskretisierung der ausgegebenen Spannungen von Blockspannungen zur Sinusform, realisierbar und es kann bei hoher Ausnutzung des Wirkungsgrades ein sehr ruhiger Motorlauf realisiert werden.

Die Vorrichtung zur Steuerung eines Betriebs eines Elektromotors umfasst eine Versorgungseinheit zur gesteuerten Ausgabe von elektrischen Spannungen an elektrischen Phasen des Elektromotors, wobei die Versorgungseinheit mit zumindest einer Erfassungseinheit zur Erfassung einer Rotorposition des Elektromotors und zumindest einem Regler zur Durchführung eines Soll-Ist-Vergleichs einer, eine Belastung des Elektromotors kennzeichnenden ersten Größe gekoppelt ist.

Erfindungsgemäß sind ein Speicher, in welchem ein Vorsteuerwinkel-Kennfeld hinterlegt ist, und eine Steuereinheit zur Ermittlung eines Vorsteuerwinkels aus dem Vorsteuerwinkel-Kennfeld, zur Ergänzung eines die Rotorposition kennzeichnenden Rotorlagewinkels mit einem Vorsteuerwinkel und einem weiteren geregelten Vorsteuerwinkelanteil zu einem Summenwinkel, zur Ermittlung der Phasenspannungen des Elektromotors in Abhängigkeit des Summenwinkels bei einem Erreichen eines Feldschwächbereichs des Elektromotors und zur Steuerung der Ausgabe der elektrischen Spannungen mittels der Versorgungseinheit an die elektrischen Phasen des Elektromotors vorgesehen.

Die erfindungsgemäße Vorrichtung zeichnet sich aufgrund der Steuerung des Betriebs des Elektromotors bei Erreichen des Feldschwächbereichs unter Verwendung des Vorsteuerwinkels durch eine besonders einfache und kostengünstige Struktur bei besonders geringen erforderlichen Rechenleistungen aus. Auch ist die Vorrichtung gegenüber aus dem Stand der Technik bekannten feldorientierten Regelungen einfach und kostengünstig ohne bauraum- und kostenintensive Komponenten zur Phasenstrommessung ausgebildet.

In einer möglichen Ausgestaltung ist der Regler ein Drehzahlregler, ein Drehmomentregler oder ein Stromregler, welche einfach, kostengünstig und zuverlässig ausgebildet sind.

In einer weiteren möglichen Ausgestaltung der Vorrichtung umfasst die Versorgungseinheit eine Brückenschaltung, beispielsweise eine B6-Brückenschaltung, mittels welcher in sehr einfacher und zuverlässiger Weise eine Blockkommutierung des Elektromotors realisierbar ist.

Ausführungsbeispiele der Erfindung werden im Folgenden anhand von Zeichnungen näher erläutert.

Darin zeigen:
Figur 1 schematisch ein Blockschaltbild eines ersten Ausführungsbeispiels eines Regelkreises zur gesteuerten Sinusansteuerung eines Elektromotors mit einer erfindungsgemäßen Feldschwächeregelung,
Figur 2 schematisch ein Ablaufdiagramm eines ersten Ausführungsbeispiels eines erfindungsgemäßen Verfahrens zur Steuerung eines Betriebs eines Elektromotors mit Feldschwächeregelung,
Figur 3 schematisch ein Blockschaltbild eines zweiten Ausführungsbeispiels eines Regelkreises zur gesteuerten Sinusansteuerung eines Elektromotors mit einer erfindungsgemäßen Feldschwächeregelung,
Figur 4 schematisch ein detailliertes Blockschaltbild des zweiten Ausführungsbeispiels des Regelkreises gemäß Figur 3, und
Figur 5 schematisch ein Ablaufdiagramm eines zweiten Ausführungsbeispiels eines erfindungsgemäßen Verfahrens zur Steuerung eines Betriebs eines Elektromotors mit Feldschwächeregelung.

Einander entsprechende Teile sind in allen Figuren mit den gleichen Bezugszeichen versehen.

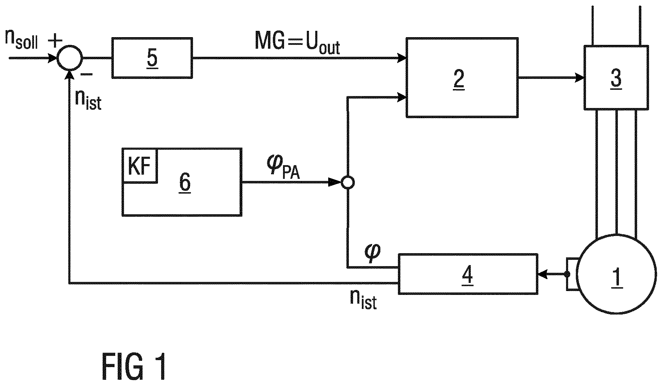

Figur 1 zeigt ein Blockschaltbild eines ersten Ausführungsbeispiels eines Regelkreises zur gesteuerten Block- oder Sinusansteuerung eines Elektromotors 1 mit einer Feldschwächregelung des Elektromotors 1.

Hierbei wird im Rahmen einer Block- oder Sinuskommutierung eine Stromzufuhr zu einzelnen Motorwicklungen des Elektromotors 1 mittels einer Steuereinheit 2 durch Steuerung einer B6-Brücke 3 gesteuert. Hierbei werden in nicht näher dargestellter Weise innerhalb eines Kommutierungsschrittes zur Pulsweitenmodulation ein High-Side-Schalter einer Halbbrücke der B6-Brücke 3 und ein Low-Side-Schalter der Halbbrücke geschaltet. Der Kommutierungsschritt wird dabei in Abhängigkeit einer Rotorposition des Elektromotors 1 gesteuert.

In einer Erfassungseinheit 4 wird weiterhin eine Ist-Drehzahl nᵢₛₜ des Elektromotors 1 ermittelt und zurückgeführt, wobei mittels eines als Drehzahlregler ausgebildeten Reglers 5 in Abhängigkeit einer Soll-Drehzahl nₛₒₗₗ des Elektromotors 1 als Modulationsgrad MG eine Ausgangsspannung Uₒᵤₜ eingestellt wird, in Abhängigkeit welcher die Steuereinheit 2 die B6-Brücke 3 steuert.

Zusätzlich in Abhängigkeit der Ist-Drehzahl nᵢₛₜ und der die Belastung des Elektromotors 1 abbildenden Größe G aus dem Vorsteuerwinkel-Kennfeld KF und dem Rotorlagewinkel ϕ der Summenwinkel ϕ_{∑} erzeugt und der Steuereinheit 2 zur Raumzeigermodulation RZM zugeführt, welche aus einer Amplitude des Spannungszeigers und einem optimierten Kommutierungswinkel ein Ansteuersignal für die B6-Brücke 3 generiert.

Das heißt, es werden in einer einfachen Motoransteuerung ohne Phasenstromrückmessung die an den Elektromotor 1 ausgegebenen elektrischen Spannungen über die Information der Rotorlage und des vorgegebenen Modulationsgrads MG aus dem als Drehzahlregler ausgebildeten Regler 5 moduliert. Wird bei dieser Art der Ansteuerung ein Ankerstellbereich des Elektromotors 1 in Richtung Feldschwächung verlassen, das heißt, wird bei Erreichen einer Obergrenze eines durch eine vorgegebene maximale Amplitude der Ausgangsspannung Uₒᵤₜ und/oder eines Motorstromes mit oder ohne Regelreserve, ein Feldschwächbereich des Elektromotors 1 erreicht, wird mittels eines unterlagerten Vorsteuerwinkelreglers 6 ein zusätzlicher Vorsteuerwinkel ϕ_{PA} ausgehend vom Vorsteuerwinkel-Kennfeld KF für die Kommutierung generiert. Dabei ist die Erzielung einer Regelreserve im Modulationsgrad MG durch Optimierung des Vorsteuerwinkels ϕ_{PA} neben der Möglichkeit zur Feldschwächnutzung des Elektromotors 1 Hauptbestandteil. Ein maximal zugelassener Wert des Vorsteuerwinkels ϕ_{PA} ist dabei vorzugsweise mittels einstellbarer Grenze limitiert vorgegeben.

Das Vorsteuerwinkel-Kennfeld KF wird insbesondere in einer Bedatungsprozedur des Gesamtsystems ermittelt, indem zu Drehzahl- und Drehmoment-Betriebspunkten des Elektromotors 1 Vorsteuerwinkel ϕ_{PA} ermittelt werden, bei welchen zumindest der Wirkungsgrad des Elektromotors 1, insbesondere ein Gesamtwirkungsgrad von Elektromotor 1 und dessen Ansteuerelektronik, maximiert ist. Das Vorsteuerwinkel-Kennfeld KF wird insbesondere in einem nicht dargestellten Speicher des Vorsteuerwinkelreglers 6 hinterlegt.

Im dargestellten Ausführungsbeispiel wird der ermittelte Rotorlagewinkel ϕ des Elektromotors 1 mit dem am Ausgang des Vorsteuerwinkelreglers 6 anliegenden Wert des Vorsteuerwinkels ϕ_{PA} derart zu einem Summenwinkel ϕ_{∑} ergänzt, insbesondere addiert, bevor der Summenwinkel ϕ_{∑} zur Verwendung für die Modulation der Spannungen für den Elektromotor 1 weitergereicht wird.

Abweichend von der Darstellung sind das erfindungsgemäße Verfahren, die erfindungsgemäße Vorrichtung und deren Ausgestaltungen in nicht gezeigter Weise auch in Regelstrukturen mit unterlagertem Stromregler oder sonstigen Regelstrukturen, beispielsweise zu einer direkten Drehmomentregelung, verwendbar und ist nicht auf die dargestellte Struktur mit Drehzahlregelung beschränkt.

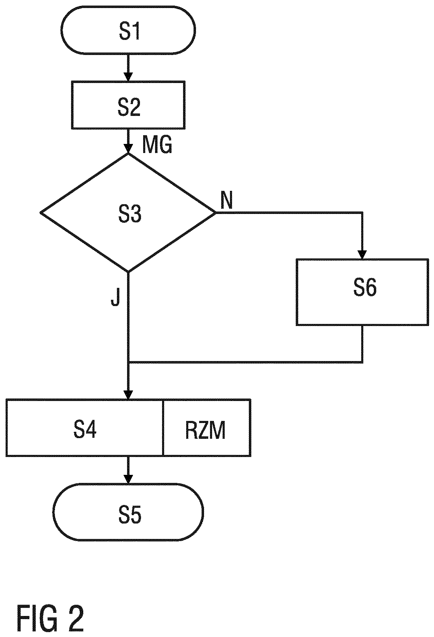

In Figur 2 ist ein Ablaufdiagramm eines möglichen ersten Ausführungsbeispiels eines erfindungsgemäßen Verfahrens zur Steuerung des Betriebs des Elektromotors 1 mit Feldschwächeregelung dargestellt.

Hierbei wird in einem ersten Verfahrensschritt S1 die Soll-Drehzahl nₛₒₗₗ oder in nicht näher dargestellter Weise ein Soll-Strom oder ein Soll-Drehmoment dem entsprechend als Drehzahlregler, Stromregler oder Drehmomentregler ausgebildeten Regler 5 zugeführt, welcher in Abhängigkeit der mittels der Erfassungseinheit 4 erfassten Ist-Drehzahl nᵢₛₜ, des Ist-Stroms oder des Ist-Drehmoments die Ausgangsspannung Uout in einem zweiten Verfahrensschritt S2 erzeugt.

In einem dritten Verfahrensschritt S3 wird für einen Ankerstellbereich des Elektromotors 1 ermittelt, ob der Modulationsgrad MG zwischen dem Wert "Null" und einem vorgegebenen Maximalwert, welcher den Übergang zum Feldschwächbereich kennzeichnet, liegt.

Ist dies der Fall (gekennzeichnet durch das Bezugszeichen J), werden die Spannungen in einem vierten Verfahrensschritt S4 in einer Raumzeigermodulation RZM in Abhängigkeit vom Rotorlagewinkel ϕ als Spannungszeiger ermittelt und in einem fünften Verfahrensschritt S5 gesteuert an die elektrischen Phasen des Elektromotors 1 ausgegeben.

Übersteigt der Modulationsgrad MG den Maximalwert (gekennzeichnet durch das Bezugszeichen N), welcher den Übergang zum Feldschwächbereich kennzeichnet, wird der Rotorlagewinkel ϕ mit einem in einem sechsten Verfahrensschritt S6 mittels des Vorsteuerwinkelreglers 6 zusätzlich ermittelten Vorsteuerwinkel ϕ_{PA} zu dem Summenwinkel ϕ_{∑} addiert. In Abhängigkeit des Summenwinkels ϕ_{∑} werden die Spannungen als Spannungszeiger in der Raumzeigermodulation RZM ermittelt und gesteuert an die elektrischen Phasen des Elektromotors 1 ausgegeben.

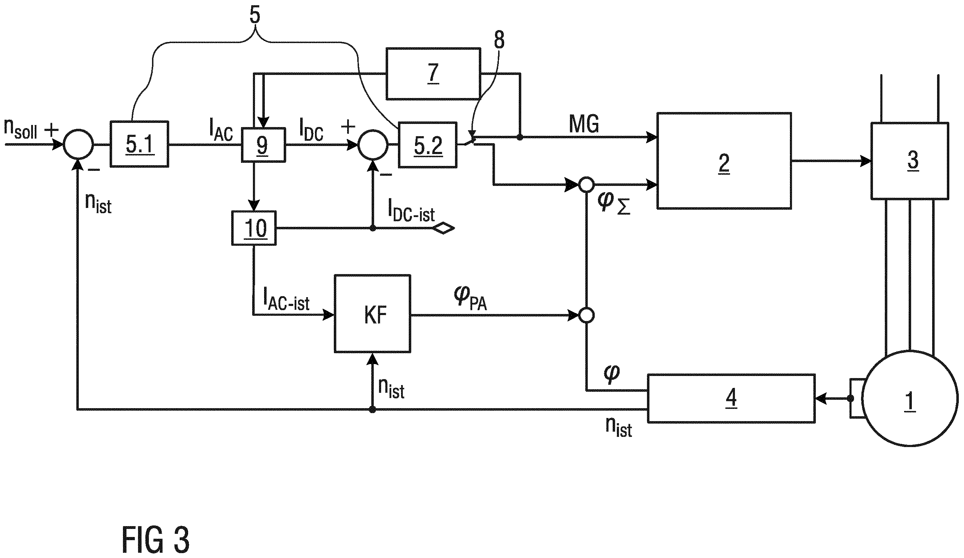

Figur 3 zeigt ein Blockschaltbild eines zweiten Ausführungsbeispiels eines Regelkreises zur gesteuerten Sinusansteuerung des Elektromotors 1 mit einer erfindungsgemäßen Feldschwächregelung.

Dabei ist der Regelkreis derart ausgebildet, dass bei der Reglerausgangsgröße des einen Drehzahlregler 5.1 und einen Stromregler 5.2 ausgebildeten Reglers 5 situativ zwischen dem Modulationsgrad MG und additivem Kommutierungswinkel, das heißt dem aus Rotorlagewinkel ϕ und Vorsteuerwinkel ϕ_{PA} gebildeten Summenwinkel ϕ_{∑}, umgeschaltet werden kann. Gleichzeitig werden die Reglerparameter dem jeweiligen Zustand angepasst.

Hierbei wird bei Erreichen der Obergrenze des Modulationsgrades MG der Modulationsgrad MG an seiner Obergrenze festgelegt, sozusagen "eingefroren", und die Modulation der elektrischen Spannungen wird allein mittels Regelung des Vorsteuerwinkels ϕ_{PA} durchgeführt. Somit wird eine weitere Regeldifferenz des Drehzahlreglers 5.1 und Stromreglers 5.2, die zur Erhöhung der Reglerstellgröße führen würde, nicht mehr dem Modulationsgrad MG zugerechnet, sondern als Vorsteuerwinkel ϕ_{PA} auf den eigentlichen Rotorlagewinkel ϕ addiert.

Hierzu wird als Reglerausgangsgröße des Drehzahlreglers 5.1 ein Wechselstrom I_{AC} gemeinsam mit dem über einen Signalaufbereiter 7 als Reglerausgangsgröße des Stromreglers 5.2 zurückgeführten Modulationsgrad MG einem Multiplikator 9 zugeführt, welcher als Reglereingangsgröße für den Stromregler 5.2 einen Soll-Gleichstrom I_{DC} erzeugt, in Abhängigkeit dessen und einem Ist-Gleichstrom I_{DC_ist} der Ausgang des Stromregler 5.2 mit einer Umschaltung 8 im Ansteueralgorithmus geschaltet wird.

Weiterhin wird anhand der ermittelten Ist-Drehzahl nᵢₛₜ und einem, die Belastung des Elektromotors 1 kennzeichnenden und mittels eines Teilers 10 erzeugten Ist-Wechselstrom I_{AC_ist} der Vorsteuerwinkel ϕ_{PA} ermittelt, welcher mit dem Rotorlagewinkel ϕ zu dem Summenwinkel ϕ_{∑} addiert wird.

Das heißt, der Reglerausgang des Stromreglers 5.2 wird situativ zwischen Modulationsgrad MG und Vorsteuerwinkel ϕ_{PA} umgeschaltet. Als Ausgangspunkt für die Verwendung als Vorsteuerwinkel ϕ_{PA} dient der Vorsteuerwinkel ϕ_{PA} aus einem Vorsteuerwinkel-Kennfeld KF, welches nur für den Ankerstellbereich einen minimalen und betriebspunktoptimierten Vorsteuerwinkel ϕ_{PA_min} liefert. Dies verbindet den Vorteil einer schnellen Steuerung mit der Eigenschaft eines Reglers 5, bleibende Abweichungen zu eliminieren.

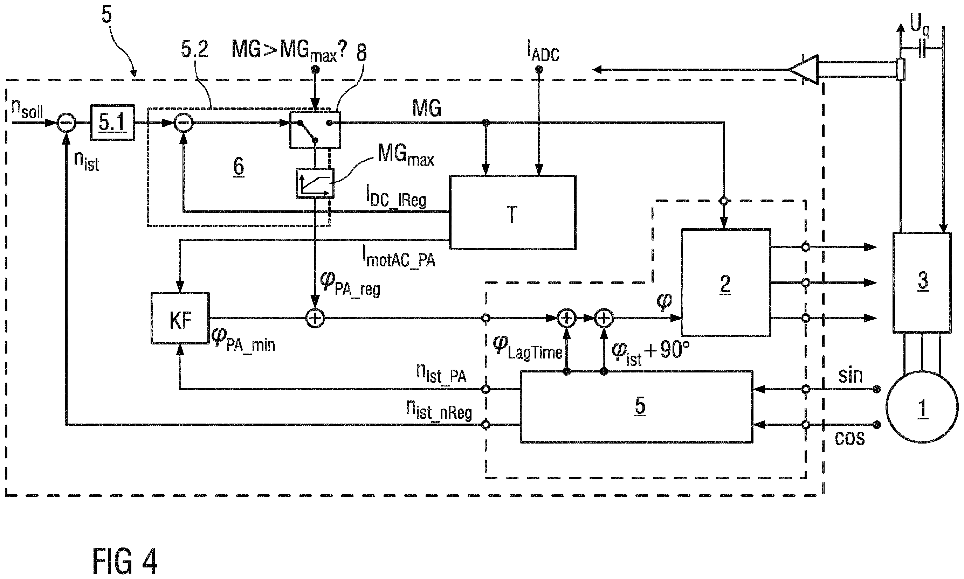

Dies ist in einem detaillierten Blockschaltbild des zweiten Ausführungsbeispiels des Regelkreises gemäß Figur 3 in Figur 4 dargestellt.

Hierbei werden mittels der Erfassungseinheit 5 aus den Sinus-Werten sin und Cosinus-Werten cos eines Drehwinkelsensors, der die Lage des Rotors des Elektromotors 1 erfasst, in einer Filterung und einer Winkel- und Drehzahlberechnung eine Ist-Drehzahl n_{ist_PA} für das Vorsteuerwinkel-Kennfeld KF und eine Ist-Drehzahl n_{ist_nReg} für den Drehzahlregler 5.1 sowie ein Ist-Rotorlagewinkel ϕᵢₛₜ und ein Latenzzeit-Rotorlagewinkel ϕ_{LagTime} ermittelt.

Weiterhin werden in einer Triggerung T von Werten eines Analog-Digital-Wandlers aus einem Stromwert I_{ADC} und dem Modulationsgrad MG ein Ist-Gleichstrom I_{DC-IReg} zur Rückführung für den Stromregler 5.2 und ein Ist-Wechselstrom I_{motAC_PA} zur Rückführung für das Vorsteuerwinkel-Kennfeld KF ermittelt, wobei in Abhängigkeit einer Überschreitung des Maximalwertes MGₘₐₓ des Modulationsgrades MG mit dem Schalter 8 geschaltet wird, ob die Einstellung der Spannungen allein anhand des Vorsteuerwinkels ϕ_{PA} oder anhand des Summenwinkels ϕ_{∑} erfolgt.

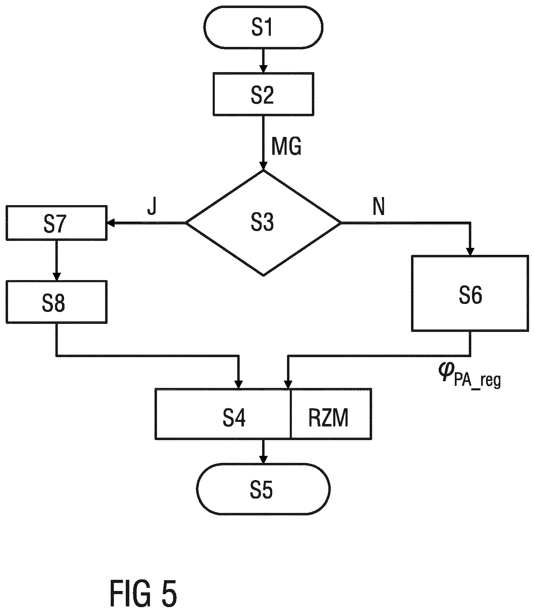

Figur 5 zeigt ein Ablaufdiagramm eines möglichen zweiten Ausführungsbeispiels eines erfindungsgemäßen Verfahrens zur Steuerung des Betriebs des Elektromotors 1 mit Feldschwächregelung.

Dabei wird im Unterschied zu dem in Figur 2 dargestellten Ausführungsbeispiel bei Unterschreitung des vorgegebenen Maximalwerts MGₘₐₓ des Modulationsgrades MG, die Belastung des Elektromotors 1 anhand einer diese kennzeichnenden zweiten Größe in einem siebten Verfahrensschritt S7 und der Vorsteuerwinkel ϕ_{PA} wird in einem achten Verfahrensschritt S8 aus dem Vorsteuerwinkel-Kennfeld KF ermittelt und der Raumzeigermodulation RZM im vierten Verfahrensschritt S4 zugeführt. Als zweite Größe werden insbesondere eine aktuell geforderte Motorspannung, ein aktueller Gleichstrom, ein aus dem Gleichstrom und einem Tastverhältnis ermittelter Phasenstrom, ein gemessener Phasenstrom und/oder ein Drehmoment verwendet.

Bei Überschreitung des vorgegebenen Maximalwerts des Modulationsgrades MG wird im sechsten Verfahrensschritt S6 ein zusätzlicher Vorsteuerwinkelanteil ϕ_{PA_reg} aus der Reglerstellgröße gebildet und mit dem Vorsteuerwinkel ϕ_{PA} und dem Rotorlagewinkel ϕ zum Summenwinkel ϕ_{∑} addiert, welcher der Raumzeigermodulation RZM im vierten Verfahrensschritt S4 zugeführt wird.

### Bezugszeichenliste

- 1: Elektromotor
- 2: Steuereinheit
- 3: B6-Brücke
- 4: Erfassungseinheit
- 5: Regler
- 5.1: Drehzahlregler
- 5.2: Stromregler
- 6: Vorsteuerwinkelregler
- 7: Signalaufbereiter
- 8: Umschalter
- 9: Multiplikator
- 10: Teiler

- cos: Cosinus-Wert
- I_{AC}: Wechselstrom
- I_{AC_ist}: Ist-Wechselstrom
- I_{ADC}: Stromwert
- I_{DC}: Soll-Gleichstrom
- I_{DC_ist}: Ist-Gleichstrom
- I_{DC-IReg}: Ist-Gleichstrom
- I_{motAC_PA}: Ist-Wechselstrom
- J: Ja
- KF: Vorsteuerwinkel-Kennfeld
- MG: Modulationsgrad
- MGₘₐₓ: Maximalwert
- N: Nein
- nᵢₛₜ: Ist-Drehzahl
- n_{ist_nReg}: Ist-Drehzahl
- n_{ist_PA}: Ist-Drehzahl
- nₛₒₗₗ: Soll-Drehzahl
- RZM: Raumzeigermodulation
- S1 bis S8: Verfahrensschritt
- sin: Sinus-Wert
- T: Triggerung
- Uₒᵤₜ: Ausgangsspannung
- ϕ: Rotorlagewinkel
- ϕᵢₛₜ: Ist-Rotorlagewinkel
- ϕ_{LagTime}: Latenzzeit-Rotorlagewinkel
- ϕ_{PA}: Vorsteuerwinkel
- ϕ_{PA_min}: Vorsteuerwinkel
- ϕ_{PA_reg}: Vorsteuerwinkelanteil
- ϕ_{∑}: Summenwinkel

## Patentansprüche

1. Verfahren zur Steuerung eines Betriebs eines Elektromotors (1), wobei in einer Modulation an elektrischen Phasen des Elektromotors (1) anliegende elektrische Spannungen in Abhängigkeit einer Rotorposition des Elektromotors (1) und in Abhängigkeit eines Soll-Ist-Vergleichs zumindest einer, eine Belastung des Elektromotors (1) kennzeichnenden ersten Größe oder einer Ist-Drehzahl des Elektromotors (nist) erzeugt und gesteuert ausgegeben werden,
wobei
- bei einem Erreichen eines Feldschwächbereichs des Elektromotors (1) ein die Rotorposition kennzeichnender Rotorlagewinkel (ϕ) mit einem vorgegebenen Vorsteuerwinkel (ϕ_{PA}) und einem weiteren geregelten Vorsteuerwinkelanteil (ϕ_{PA_reg}) zu einem Summenwinkel (ϕ_{∑}) ergänzt wird,
- wobei der Summenwinkel (ϕ_{∑}) bei Erreichen des Feldschwächbereichs zur Kennzeichnung der Rotorposition in der Modulation verwendet wird und
- wobei das Erreichen des Feldschwächbereichs bei Erreichen einer Obergrenze eines durch eine vorgegebene maximale Amplitude einer Motorspannung und/oder eines Motorstromes gekennzeichneten Modulationsgrades (MG) erfasst wird, wobei bei Erreichen des Feldschwächbereichs der Modulationsgrad (MG) an seiner Obergrenze festgelegt wird und die Modulation der elektrischen Spannungen mittels Regelung des Vorsteuerwinkels (ϕ_{PA}) durchgeführt wird.

2. Verfahren nach Anspruch 1,
**dadurch gekennzeichnet, dass** der Vorsteuerwinkel (ϕ_{PA}) in Abhängigkeit einer Ist-Drehzahl (nist) und zumindest einer, eine Belastung des Elektromotors (1) kennzeichnenden zweiten Größe (G) aus einem Vorsteuerwinkel-Kennfeld (KF) ermittelt und um den weiteren geregelten Vorsteuerwinkelanteil (ϕ_{PA_reg}) ergänzt wird.

3. Verfahren nach einem der vorhergehenden Ansprüche,
**dadurch gekennzeichnet, dass** der Vorsteuerwinkel (ϕ_{PA}) für einen Ankerstellbereich des Elektromotors (1) vorgegeben wird.

4. Verfahren nach einem der vorhergehenden Ansprüche,
**dadurch gekennzeichnet, dass** ein maximaler Wert des Vorsteuerwinkels (ϕ_{PA}) vorgegeben wird.

5. Verfahren nach einem der vorhergehenden Ansprüche,
**dadurch gekennzeichnet, dass** der Vorsteuerwinkel (ϕ_{PA}) derart vorgegeben wird, dass eine Regelreserve in der Modulation für eine Spannung als Stellgröße erzeugt wird.

6. Verfahren nach einem der vorhergehenden Ansprüche,
**dadurch gekennzeichnet, dass** als die Belastung des Elektromotors (1) kennzeichnende erste Größe eine Drehzahl, ein Drehmoment und/oder ein Motorstrom verwendet werden.

7. Verfahren nach einem der Ansprüche 2 bis 6,
**dadurch gekennzeichnet, dass** als die Belastung des Elektromotors (1) kennzeichnende zweite Größe eine aktuell geforderte Motorspannung, ein aktueller Gleichstrom, ein aus dem Gleichstrom und einem Tastverhältnis ermittelter Phasenstrom, ein gemessener Phasenstrom und/oder ein Drehmoment verwendet werden.

8. Verfahren nach einem der vorhergehenden Ansprüche,
**dadurch gekennzeichnet, dass** das Vorsteuerwinkel-Kennfeld (KF) erzeugt wird, indem zu Drehzahl- und Drehmoment-Betriebspunkten des Elektromotors (1) Vorsteuerwinkel (ϕ_{PA}) ermittelt werden, bei welchen zumindest ein Wirkungsgrad des Elektromotors (1) maximiert ist.

9. Verfahren nach einem der vorhergehenden Ansprüche,
**dadurch gekennzeichnet, dass** die Spannungen in Abhängigkeit des Summenwinkels (ϕ_{∑}) in einer Raumzeigermodulation (RZM) ermittelt werden.

10. Vorrichtung zur Steuerung eines Betriebs eines Elektromotors (1),
- umfassend eine Versorgungseinheit zur gesteuerten Ausgabe von elektrischen Spannungen an elektrischen Phasen des Elektromotors (1),
- wobei die Versorgungseinheit mit zumindest einer Erfassungseinheit (4) zur Erfassung einer Rotorposition des Elektromotors (1) und
- zumindest einem Regler (5) zur Durchführung eines Soll-Ist-Vergleichs einer, eine Belastung des Elektromotors (1) kennzeichnenden ersten Größe gekoppelt ist,
**gekennzeichnet durch**
- einen Speicher, in welchem ein Vorsteuerwinkel-Kennfeld (KF) hinterlegt ist,
- eine Steuereinheit (2), welche zur Ermittlung eines Vorsteuerwinkels (ϕ_{PA}) aus dem Vorsteuerwinkel-Kennfeld (KF), zur Ergänzung eines die Rotorposition kennzeichnenden Rotorlagewinkels (ϕ) mit einem Vorsteuerwinkel (ϕ_{PA}) und einem weiteren geregelten Vorsteuerwinkelanteil (ϕ_{PA_reg}) zu einem Summenwinkel (ϕ_{∑}), zur Ermittlung der Spannungen in Abhängigkeit des Summenwinkels (ϕ_{∑}) bei einem Erreichen eines Feldschwächbereichs des Elektromotors (1) und zur Steuerung der Ausgabe der elektrischen Spannungen mittels der Versorgungseinheit an die elektrischen Phasen des Elektromotors (1) eingerichtet ist und wobei mittels der Steuereinheit (2) das Erreichen des Feldschwächbereichs bei Erreichen einer Obergrenze eines **durch** eine vorgegebene maximale Amplitude einer Motorspannung und/oder eines Motorstromes gekennzeichneten Modulationsgrades (MG) erfasst wird und bei Erreichen des Feldschwächbereichs der Modulationsgrad (MG) an seiner Obergrenze festgelegt wird und die Modulation der elektrischen Spannungen mittels Regelung des Vorsteuerwinkels (ϕ_{PA}) durchgeführt wird.

11. Vorrichtung nach Anspruch 10 ,
**dadurch gekennzeichnet, dass** der Regler (5) ein Drehzahlregler (5.1), ein Drehmomentregler oder ein Stromregler (5.2) ist oder diesen umfasst.

12. Vorrichtung nach Anspruch 10 oder 11 ,
**dadurch gekennzeichnet, dass** die Versorgungseinheit eine Brückenschaltung umfasst.

13. Vorrichtung nach Anspruch 12 ,
**dadurch gekennzeichnet, dass** die Brückenschaltung eine B6-Brückenschaltung ist.

## Claims

1. Method for controlling an operation of an electric motor (1), wherein in a modulation electric voltages which are applied to electric phases of the electric motor (1) are generated and output in a controlled fashion as a function of a rotor position of the electric motor (1) and as a function of a setpoint/actual comparison of at least one first variable which characterizes a load of the electric motor (1) or of an actual rotational speed of the electric motor (n_{act}),
wherein
- when a field-weakening range of the electric motor (1) is reached, a predefined pilot-control angle (ϕ_{PA}) and a further regulated pilot-control angle component (ϕ_{PA_reg}) are added to a rotor position angle (ϕ), which characterizes the rotor position, to form a composite angle (ϕ_{∑}),
- wherein when the field-weakening range is reached the composite angle (ϕ_{∑}) is used to characterize the rotor position in the modulation and
- wherein the reaching of the field-weakening range is detected when an upper limit of a degree of modulation (MG) which is **characterized by** a predefined maximum amplitude of a motor voltage and/or a motor current is reached, wherein when the field-weakening range is reached, the degree of modulation (MG) is defined at its upper limit, and the modulation of the electric voltages is carried out by regulating the pilot-control angle (ϕ_{PA}).

2. Method according to Claim 1,
**characterized in that** the pilot-control angle (ϕ_{PA}) is determined as a function of an actual rotational speed (n_{act}) and of at least one second variable (G), which characterizes a load of the electric motor (1), from a pilot-control angle characteristic diagram (KF), and the further regulated pilot-control angle component (ϕ_{PA_reg}) is added to said pilot-control angle (ϕ_{PA}).

3. Method according to either of the preceding claims,
**characterized in that** the pilot-control angle (ϕ_{PA}) is predefined for an armature actuation range of the electric motor (1).

4. Method according to one of the preceding claims,
**characterized in that** a maximum value of the pilot-control angle (ϕ_{PA}) is predefined.

5. Method according to one of the preceding claims,
**characterized in that** the pilot-control angle (ϕ_{PA}) is predefined in such a way that a regulation reserve is generated during the modulation for a voltage as a manipulated variable.

6. Method according to one of the preceding claims,
**characterized in that** a rotational speed, a torque and/or a motor current are used as a first variable which characterizes the load of the electric motor (1).

7. Method according to one of Claims 2 to 6,
**characterized in that** a currently requested motor voltage, a current direct current, a phase current which is determined from the direct current and a pulse duty factor, a measured phase current and/or a torque are used as a second variable which characterizes the load of the electric motor (1).

8. Method according to one of the preceding claims,
**characterized in that** the pilot-control angle characteristic diagram (KF) is generated by determining pilot-control angles (ϕ_{PA}) at rotational speed operating points and torque operating points of the electric motor (1) at which at least one efficiency level of the electric motor (1) is maximized.

9. Method according to one of the preceding claims,
**characterized in that** the voltages are determined as a function of the composite angle (ϕ_{∑}) in a space vector modulation (RZM).

10. Device for controlling an operation of an electric motor (1),
- comprising a supply unit for the controlled outputting of electric voltages at electric phases of the electric motor (1),
- wherein the supply unit is coupled to at least one detection unit (4) for detecting a rotor position of the electric motor (1), and
- to at least one regulator (5) for carrying out a setpoint/actual comparison of a first variable which characterizes a load of the electric motor (1),
**characterized by**
- a memory in which a pilot-control angle characteristic diagram (KF) is stored,
- a control unit (2) which is set up for determining a pilot-control angle (ϕ_{PA}) from the pilot-control angle characteristic diagram (KF), for adding a pilot-control angle (ϕ_{PA}) and a further regulated pilot-control angle component (ϕ_{PA_reg}) to a rotor position angle (ϕ), which characterizes the rotor position, to form a composite angle (ϕ_{∑}), for determining the voltages as a function of the composite angle (ϕ_{∑}) when a field-weakening range of the electric motor (1) is reached, and for controlling the outputting of the electric voltages to the electric phases of the electric motor (1) by means of the supply unit, and wherein, by means of the control unit (2),
- wherein the reaching of the field-weakening range is detected when an upper limit of a degree of modulation (MG) which is **characterized by** a predefined maximum amplitude of a motor voltage and/or a motor current is reached and when the field-weakening range is reached, the degree of modulation (MG) is defined at its upper limit, and the modulation of the electric voltages is carried out by regulating the pilot-control angle (ϕ_{PA}).

11. Device according to Claim 10,
**characterized in that** the regulator (5) is a rotational speed regulator (5.1), a torque regulator or a power regulator (5.2) or comprises the latter.

12. Device according to Claim 10 or 11,
**characterized in that** the supply unit comprises a bridge circuit.

13. Device according to Claim 12,
**characterized in that** the bridge circuit is a B6 bridge circuit.

## Revendications

1. Procédé de commande du fonctionnement d'un moteur électrique (1), dans lequel
les tensions électriques appliquées dans une modulation sur les phases électriques du moteur électrique (1) sont produites et délivrées de manière contrôlée en fonction de la position du rotor de moteur électrique (1) et en fonction d'une comparaison entre les valeurs de consigne et les valeurs effectives d'au moins une première grandeur qui caractérise la charge du moteur électrique (1) ou de la vitesse de rotation effective (nᵢₛₜ) du moteur électrique,
- lorsqu'une plage d'atténuation du champ du moteur électrique (1) est atteinte, l'angle (φ) de la position du rotor, qui caractérise la position du rotor, est complété d'un angle prédéterminé de précommande (φ_{PA}) et d'une autre fraction régulée (φ_{PA_reg}) de l'angle de précommande pour former un angle de somme (φ_{∑}),
- l'angle de somme (φ_{∑}) étant utilisé dans la modulation pour caractériser la position du rotor lorsque la plage d'atténuation du champ est atteinte,
- l'atteinte de la plage d'atténuation du champ est détectée si une limite supérieure d'un degré de modulation (MG), **caractérisée par** une amplitude maximale prédéterminée de la tension du moteur et/ou du courant du moteur, est atteinte, et lorsque la plage d'atténuation du champ est atteinte, le degré de modulation (MG) est fixé à sa limite supérieure et la modulation des tensions électriques est réalisée au moyen de la régulation de l'angle de précommande (φ_{PA}).

2. Procédé selon la revendication 1, **caractérisé en ce que** l'angle de précommande (φ_{PA}) est déterminé dans un champ (KF) de caractéristiques d'angles de précommande en fonction de la vitesse de rotation effective (nᵢₛₜ) et d'au moins une deuxième grandeur (G) qui caractérise la charge du moteur (1) et est complété de l'autre fraction régulée (φ_{PA_reg}) de l'angle de précommande.

3. Procédé selon l'une des revendications précédentes, **caractérisé en ce que** l'angle de précommande (φ_{PA}) est prédéterminé pour une plage de positions de l'induit du moteur électrique (1).

4. Procédé selon l'une des revendications précédentes, **caractérisé en ce qu'**une valeur maximale de l'angle de précommande (φ_{PA}) est prédéterminée.

5. Procédé selon l'une des revendications précédentes, **caractérisé en ce que** l'angle de précommande (φ_{PA}) est prédéterminé en formant comme grandeur de réglage une réserve de régulation dans la modulation d'une tension.

6. Procédé selon l'une des revendications précédentes, **caractérisé en ce que** comme première grandeur qui caractérise la charge du moteur életcrique (1), la vitesse de rotation, la coupe de rotation et/ou le courant du moteur sont utilisés.

7. Procédé selon l'une des revendications 2 à 6, **caractérisé en ce que** comme deuxième grandeur qui caractérise la charge du moteur életcrique (1), la tension effectivement appliquée sur la moteur, le courant continu effectif, un courant de phase déterminé à partir du courant continu et d'un taux d'échantillonnage, le courant de phase mesuré et/ou le couple de rotation sont utilisés.

8. Procédé selon l'une des revendications précédentes, **caractérisé en ce que** le champ (KF) de caractéristiques d'angles de précommande est formé en déterminant l'angle de précommande (φ_{PA}) en des points de fonctionnement de la vitesse de rotation et du couple de rotation du moteur électrique (1) auxquels au moins le rendement du moteur électrique (1) est maximisé.

9. Procédé selon l'une des revendications précédentes, **caractérisé en ce que** les tensions sont déterminées en fonction de l'angle de somme (φ_{∑}) dans une modulation vectorielle (RZM).

10. Ensemble de commande du fonctionnement d'un moteur électrique (1), comprenant
- une unité d'alimentation qui délivre de manière contrôlée des tensions électriques aux phases électriques du moteur électrique (1),
- l'unité d'alimentation étant raccordée à au moins une unité de saisie (4) qui saisit le position du rotor du moteur électrique (1),
- au moins un régulateur (5) étant raccordé pour exécuter une comparaison entre les valeurs de consigne et les valeurs effectives d'au moins une première grandeur qui caractérise la charge du moteur électrique (1),
**caractérisé par**
- une mémoire dans laquelle est conservé un champ (KF) de caractéristiques d'angles de précommande,
- une unité de commande (2) conçue pour déterminer un angle de précommande (φ_{PA}) à partir du champ (KF) de caractéristiques d'angles de précommande, pour compléter l'angle (φ) de la position du rotor, d'un angle prédéterminé de précommande (φ_{PA}) et d'une autre fraction régulée (φ_{PA_reg}) de l'angle de précommande pour former un angle de somme (φ_{∑}), pour déterminer les tensions en fonction de l'angle de somme (φ_{∑}) lorsqu'une plage d'atténuation du champ du moteur électrique (1) est atteinte et pour commander l'application des tensions électriques au moyen de l'unité d'alimentation sur les phases électriques du moteur électrique (1), l'atteinte de la plage d'atténuation du champ étant détectée au moyen de l'unité de commande (2) si une limite supérieure d'un degré de modulation (MG), **caractérisée par** une amplitude maximale prédéterminée de la tension du moteur et/ou du courant du moteur est atteinte, le degré de modulation (MG) étant fixé à sa limite supérieure lorsque la plage d'atténuation du champ est atteinte et la modulation des tensions électriques étant réalisée au moyen de la régulation de l'angle de précommande (φ_{PA}).

11. Ensemble selon la revendication 10, **caractérisé en ce que** le régulateur (5) est un régulateur (5.1) de couple de rotation, un régulateur (5.2) de courant ou les contient.

12. Ensemble selon les revendications 10 ou 11, **caractérisé en ce que** l'unité d'alimentation est un circuit en pont.

13. Ensemble selon la revendication 12, **caractérisé en ce que** le circuit en pont est un circuit en pont à 6 branches.
